# EUROPEAN PATENT SPECIFICATION

(11) **EP 4 364 363 B1**
(45) Date of publication and mention of the grant of the patent: **29.04.2026**
(21) Application number: 22755332.8
(22) Date of filing: 30.06.2022
(51) Int. Cl.: H04L 12/46

(54) **DYNAMIC SOFT DUPLEX WITH MIXED MODE**
DYNAMISCHES SOFT-DUPLEX MIT MISCHMODUS
DUPLEX SOUPLE DYNAMIQUE AVEC MODE MIXTE

(30) Priority: 30.06.2021 US 202163217048 P; 30.06.2021 US 202163217065 P
(43) Date of publication of application: 08.05.2024
(73) Proprietor: ARRIS Enterprises LLC, Suwanee Georgia 30024 (US)
(72) Inventor: ULM, John M., Suwanee, Georgia 30024 (US)
(74) Representative: Openshaw & Co.
(86) International application number: PCT/US2022/035769
(87) International publication number: WO 2023/278730

(56) References cited:
- US-A1- 2013 198 796
- US-A1- 2017 237 492
- US-A1- 2021 160 454

## Description

### CROSS REFERENCE TO RELATED APPLICATIONS

This application claims the benefit of U.S. Provisional Patent Application Number 63/217,048 filed June 30, 2022 and U.S. Provisional Patent Application Number 63/217,065 filed June 30, 2022.

### BACKGROUND

The subject matter of this application relates to improved systems and methods for communicating data using upstream spectrum that overlaps with downstream spectrum, as defined in independent claim 1 and in dependent claims 2-7.

Cable Television (CATV) services provide content to large groups of subscribers from a central delivery unit, called a "head end," which distributes channels of content to its subscribers from this central unit through a branch network comprising a multitude of intermediate nodes. Modem Cable Television (CATV) service networks, however, not only provide media content such as television and music channels to a customer, but also provide a host of digital communication services such as Internet Service, Video-on-Demand, telephone service such as VoIP, and so forth. These digital communication services, in turn, require not only communication in a downstream direction from the head end, through the intermediate nodes and to a subscriber, but also require communication in an upstream direction from a subscriber and to the content provider through the branch network.

To this end, CATV head ends have traditionally included a separate Cable Modem Termination System (CMTS), used to provide high speed data services, such as video, cable Internet, Voice over Internet Protocol, etc. to cable subscribers. Typically, a CMTS will include both Ethernet interfaces (or other more traditional high-speed data interfaces) as well as RF interfaces so that traffic coming from the Internet can be routed (or bridged) through the Ethernet interface, through the CMTS, and then onto the optical RF interfaces that are connected to the cable company's hybrid fiber coax (HFC) system. Downstream traffic is delivered from the CMTS to a cable modem in a subscriber's home, while upstream traffic is delivered from a cable modem in a subscriber's home back to the CMTS. Many modem CATV systems have combined the functionality of the CMTS with the video delivery system (EdgeQAM) in a single platform called the Converged Cable Access Platform (CCAP). Still other modem CATV systems adopt distributed architectures, such as Remote PHY (or R-PHY), Remote MAC-PHY or other architectures that relocate traditional functionality of the CCAP into the network's fiber nodes.

Regardless of which such architectures were employed, previous implementations of CATV systems bifurcated available bandwidth into upstream and downstream transmissions *i.e.,* data was only transmitted in one direction across any part of the spectrum. For example, early iterations of the Data Over Cable Service Interface Specification (DOCSIS) specified assigned upstream transmissions to a frequency spectrum between 5 MHz and 42 MHz, and assigned downstream transmissions to a frequency spectrum between 54 MHz and 750 MHz. Though later iterations of the DOCSIS standard expanded the width of the spectrum reserved for each of the upstream and downstream transmission paths, the spectrum assigned to each respective direction did not overlap.

Segmenting spectrum between upstream and downstream transmission, however, makes it difficult to deliver multi-gigabit services, as well as to fulfill recent trends in the cable industry such as deployment of DOCSIS 3.1 Orthogonal Frequency Division Multiplexing (OFDM), deep fiber migration, and distributed access architectures such as R-PHY, R-MACPHY etc.

Recently, in an attempt to offer symmetric services in both upstream and downstream, new DOCSIS 4.0 Full Duplex (FDX) standards have been introduced to use the coaxial network bandwidth simultaneously for both upstream and downstream traffic. With FDX DOCSIS, upstream and downstream spectrum is no longer separated, allowing up to 5 Gbps upstream service and 10 Gbps downstream service over the cable access network. In a full duplex system, because the CCAP/R-PHY core knows the characteristics of its own downstream transmission, it can distinguish upstream communications transmitted in the same frequencies that it provides those downstream services.

While FDX is truly full-duplex from the CCAP/R-PHY perspective, it only half-duplex from a given cable modem's perspective. A cable modem can be either transmitting or receiving, but not both, on any given FDX channel in the FDX band. It also turns out that a cable modem's upstream transmission in an FDX band might generate noise for its neighbors on the same tap or adjacent tap so they cannot hear the downstream transmission either. This is called an Interference Group (IG). Cable Modems (CMs) within an Interference Group are a group of neighboring modems which generate noise levels when they transmit data upstream that overwhelm the downstream signals in that same frequency arriving within the group. The CMs within a single Interference Group cannot distinguish between upstream and downstream transmissions in the same frequency, hence in an FDX architecture the CMTS will simultaneously receive and transmit in the same FDX spectrum, while FDX Cable modems within an Interference Group can either receive or transmit in the same FDX spectrum, but not both. For convenience, the CMTS might group multiple IGs into a single Transmission Group (TG) for scheduling purposes. The FDX band is divided into sub-bands, and the CMTS assigns which sub-band(s) each cable modem uses for upstream or downstream operation. This is referred to as a resource block assignment (RBA). Different cable modems will have different bandwidth demand for both the upstream and downstream directions, which can change over time, and FDX accordingly allows for the RBA to be changed dynamically. Thus, communication is full duplex from the perspective of the CMTS but is frequency division duplex from the perspective of the cable modems within an Interference Group.

Unfortunately, full duplex systems do not work well when there are amplifiers along the path from the last node to the group of subscribers served by the node because the presence of those amplifiers causes all modems along the branch to interfere with each other. This means that an entire RF leg with potentially hundreds of subscribers need to operate in a Time-Division Duplex manner, thus not achieving true full duplex capacity. What is desired, therefore, is an alternative network delivery architecture that allows spectrum to be shared between upstream and downstream transmissions.

US2017/237492A1 discloses a prior art example of systems and methods for achieving full duplex bidirectional transmission across coaxial cable in a hybrid fiber-coaxial cable TV network.

### BRIEF DESCRIPTION OF THE DRAWINGS

For a better understanding of the invention, and to show how the same may be carried into effect, reference will now be made, by way of example, to the accompanying drawings, in which:
FIG. 1 shows an exemplary full duplex R-PHY CATV architecture where many individual cable modems, each connected to a CCAP core through a branch network of RPD devices, are sorted into Interference Groups organized to minimize interference in the downstream signal caused by upstream transmissions.
FIG. 2A shows the theoretical effect of a Node + X architecture on interference groups in a full duplex system.
FIG. 2B shows the actual effect of a Node + X architecture on interference groups in a full duplex system.
FIGS. 3A and 3B illustrate upstream and downstream flows in a "soft duplex" implementation, where an RF leg from the fiber nodes act as a single interference group. The arrows in the amplifiers show the direction of the "shared" spectrum.
FIG. 3C and 3D illustrate the spectrum switching functionality of an amplifier in the soft duplex implementation of FIGS 3A and 3B, respectively.
FIGS 4A-4C show exemplary switching circuits for implementing the soft duplex architecture of FIGS 3A and 3B in various devices, where FIG. 4A shows the switching circuit in a Fiber Node with a Remote MAC-PHY Device (RMD), FIG. 4B shows the switching circuit in a single port Line Extender amplifier, and FIG. 4C shows the switching circuit in a multi-port Bridger amplifier .
FIGS 4D and 4E illustrate the operation of the multi-port Bridger amplifier circuit of FIG. 4C when shared spectrum is in the downstream and upstream directions, respectively.
FIG 5A shows an alternate "mixed mode" implementation of a soft duplex system.
FIG. 5B and 5C illustrate the switching functionality of an amplifier in the "mixed mode" soft duplex implementation of FIGS 5A.
FIG. 6 shows the benefit of the "mixed mode" implementation of FIG. 5A to provide subscribers in an RF leg who are not transmitting in the upstream to receive downstream transmissions at a time that another subscriber in an RF is transmitting in the upstream.
FIG. 7 shows an exemplary amplifier circuit for implementing the "mixed mode" soft duplex system of FIG. 5A
FIGS 8A-8D show various switching functionalities of the amplifier of FIG. 7
FIGS 9A - 9C show dependencies in transmission groups with the "mixed mode" soft duplex system of FIG. 5A.
FIGS 10A-10H show exemplary tap and hardline bit loading capacities for different numbers of amplifiers in a chain and spacing between amplifiers.
FIGS. 11A and 11B show an alternative "partial" mixed mode soft duplex architecture where only a small subset of amplifiers has mixed mode implementation as shown in FIG. 5A while the majority of amplifiers are traditional soft-duplex implementations as shown in FIG. 4B and 4C.
FIG. 12 shows the benefits of the "partial" mixed mode soft duplex architecture of FIGS. 11A and 11B.

### DETAILED DESCRIPTION

As already noted, the DOCSIS specification has historically used different frequency bands for upstream and downstream data traffic. Even though multiple cable modems in a given service group share the same network resources, the upstream and downstream traffic are completely isolated.

In FDX systems, however, interference between the bi-directional transmissions must be mitigated for the intended downstream signals to be properly received by cable modems (CMs) within an Interference Group. In a point-to-multi-point system, where multiple CMs are connected to the same Cable Modem Termination System (CMTS) port, when one CM transmits upstream to the CMTS, the upstream signal may leak through the cable plant and interfere with reception of downstream signals at the same frequency received by other cable modems within an Interference Group. Because the source of the interference is unknown to all of the receiving CMs (except for one), techniques such as echo cancellation cannot be used at the CMs.

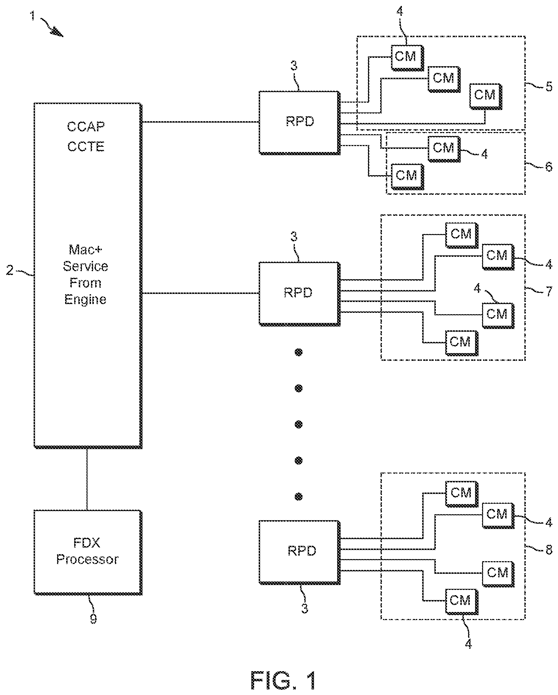

Since RF signals from a modem transmitting data in the upstream direction can interfere with other modems within an Interference Group that receive data in the downstream direction, such interference can be minimized by identifying the modems within each Interference Group and organizing them into a logical construct within the CMTS. This logical construct is actually called an "Interference Group". Referring to FIG. 1, for example, a CATV transmission architecture 1 may include a distributed CCAP system consisting of a CCAP Core 2 at a head end with associated Remote PHY Devices (RPD) 3 that are connected to a plurality of cable modems 4 via a branched transmission network. The architecture of FIG. 1 is shown as an R-PHY system where the CMTS MAC operates in the CCAP core 2 in the Head End while Remote Physical Devices (RPDs) 3 are located in the Fiber Node. An alternate system may use a traditional integrated CCAP (I-CCAP) operating fully in a head end, connected to the cable modems 4 via a plurality of nodes/amplifiers. Another alternative system may use a Remote MACPHY Device (RMD) in a fiber node connected to the cable modems 4 via a plurality of amplifiers.

Preferably, to facilitate FDX transmission, the cable modems are organized into Interference Groups (IGs) 5, 6, 7, 8, etc. As the name indicates, an IG is a collection or group of modems where the upstream transmission of one or more of the modems in the IG will unacceptably interfere with downstream reception of other modems in the IG, but will not unacceptably interfere with downstream transmissions of cable modems in any other IG. Identifying these IGs and using the IG groups to appropriately schedule downstream and upstream transmissions is crucial to achieving high throughput in FDX systems by allowing the CCAP to schedule downstream transmissions to all cable modems in an IG at a time when no cable modem in that IG is transmitting in the upstream direction. To this end, to identify cable modems that interfere with each other and group them into IG's a sounding technique is used to measure the interference caused to other cable modems in a network by the upstream transmissions a particular cable modem. During sounding, a given modem sends out pilot signals in the upstream while the rest of the modems in the service group measure their downstream modulation error rate (RxMER). This process is repeated by different transmitting modems resulting in a matrix showing the co-channel interference for the whole service group. Sounding data may be collected from a large number of service groups from several CCAP cores, and the collected data may be processed in a centralized processor 9 shown in FIG. 1 to organize the cable modems into respective IGs.

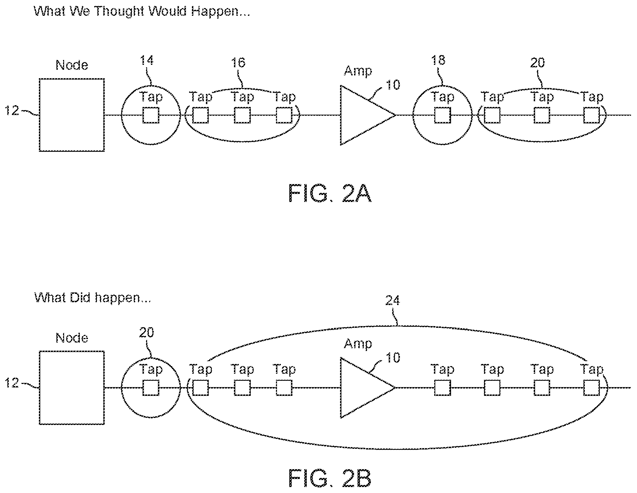

FIGS. 2A and 2B illustrate an IG elongation problem encountered in a node+X architecture, where at least one RF amplifier 10 is located downstream from the last node 12 towards the taps to the group of cable modems serviced by the last node. FIG. 2A generally illustrates a theoretical organization of IGs 14, 16, 18, and 20 that would have been expected to be produced by the sounding procedure described in the preceding paragraph where a number of different IGs would be produced, thus allowing simultaneous upstream transmissions from several different IGs. FIG. 2B, however, shows what actually occurs in a Node + X architecture, i.e. the amplifier 10 causes a single, very large IG to result from almost all the taps (cable modems) to either side of it, negating the effectiveness of FDX and forcing upstream transmissions to essentially utilize frequency division duplex (FDD) operation.

Although the elongation problem shown in FIGS 2A and 2B could be overcome by eliminating all amplifiers downstream of the last node, i.e. migrating to a Node + 0 architecture, this is often an impractical solution. For a cost perspective, migrating to a Node + 0 architecture starting from, say a Node + 3 architecture already incurs about 85% of the cost of simply delivering Fiber-to-the-Home, where full duplex transmission is supported without the need for dividing subscribers into Interference Groups. Thus, any provider contemplating the cost of a Node+0 architecture may instead move directly to FTTH unless another alternative is proposed.

To address this problem, a special operational mode of traditional FDX, referred to as "Soft-FDX" or "Soft-FDD" is proposed, which emulates FDX operation in a cascaded Node+X architecture. The disclosed "Soft-FDD" systems and methods are based on operating each of the node radio frequency (RF) legs in an FDD mode, such that the upstream and downstream spectra do not overlap, as in standard HFC networks. The term "soft"' refers to the ability to change the location of the upstream/downstream split using software. Soft-FDD enables relatively high upstream speeds, which are occasionally demanded by users, without permanently locking the spectrum into the upstream direction, which can severely affect the valuable downstream spectrum used to offer many services including video and high download speeds which are demanded more frequently than upstream services. The various RF legs on a single node can have different upstream/downstream split configurations, leading to overlapping upstream and downstream spectra at the node/MAC level, which translates to an FDX type operation at the node/MAC level. In other words, the Soft-FDD mode is equivalent to a traditional FDX mode with an IG size of all CMs on one RF leg.

Soft-FDD implementations can be either static or dynamic. Static Soft-FDD refers to the case where the upstream/downstream split location does not change without operator-initiated configuration changes, which causes the split to stay in a given configuration for months, or even years. On the other hand, dynamic Soft-FDD refers to the case where the upstream/downstream split location changes in real time based on traffic demand (on the order of milliseconds or seconds). For instance, in the dynamic Soft-FDD mode, when there is a need for more upstream spectrum as a result of say a subscriber-initiated upstream speed test, the upstream/downstream split changes automatically to accommodate the needed upstream bandwidth , and when the need for the added upstream spectrum goes way, the split changes back to reclaim the valuable downstream spectrum. Both static and dynamic Soft-FDD can be implemented using special assignment of FDX RBA messages. Several potential techniques for communicating the required Upstream and Downstream spectra are described here, while more methods are possible.

In the first approach, the amplifier circuit would include a CM to monitor and receive the FDX RBA messages sent by the DOCSIS MAC. The CM can receive the FDX RBA messages for the Interference Group to which it belongs and use the information to effect appropriate changes on the switches selecting the Upstream and Downstream spectra settings. In the second approach, the amplifier circuit would include a CM to monitor and receive normal IP messages sent by an IP-based controller in the head-end or node (which communicates with the DOCSIS MAC). The CM can receive the IP RBA messages and use the information to affect appropriate changes on the switches selecting the Upstream and Downstream spectra settings. In the third approach, the amplifier circuit would include a simple receiver circuit to monitor and receive protocol messages on a dedicated narrow-band channel. These protocol messages could be communicated using simple modulation techniques such as OOK or FSK signaling. These protocol messages could be sent by a controller in the head-end or node (which communicates with the DOCSIS MAC). The receiver circuit can receive the protocol messages and use the information to effect appropriate changes on the switches selecting the Upstream and Downstream spectra settings. In another possible implementation, a simple receiver circuit could be used to analyze the presence &/or absence of pilot tones and use that information to configure the amplifier.

Preferably, the disclosed systems and methods for using FDX nodes, amplifiers, and modem technologies for cascaded (i.e., N+x) FDD networks via a Soft-FDD is compliant with the DOCSIS FDX specifications.

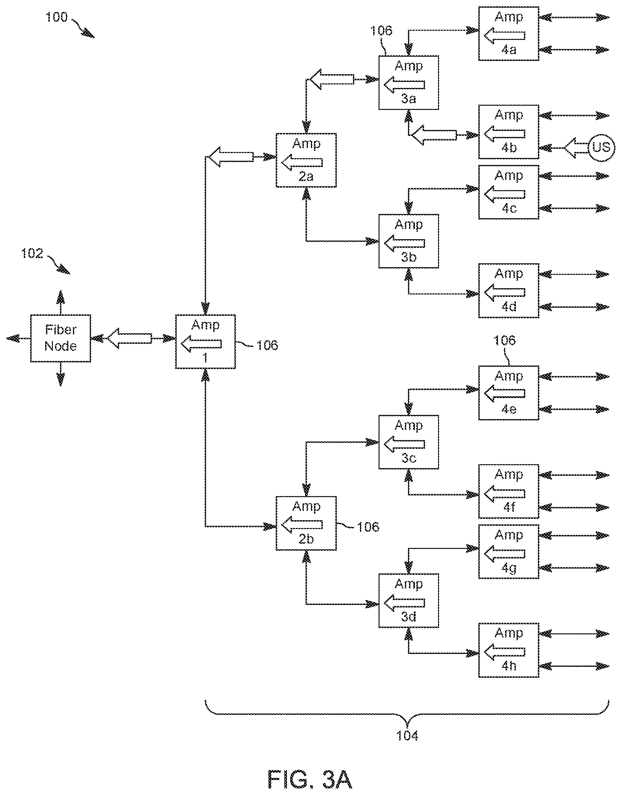

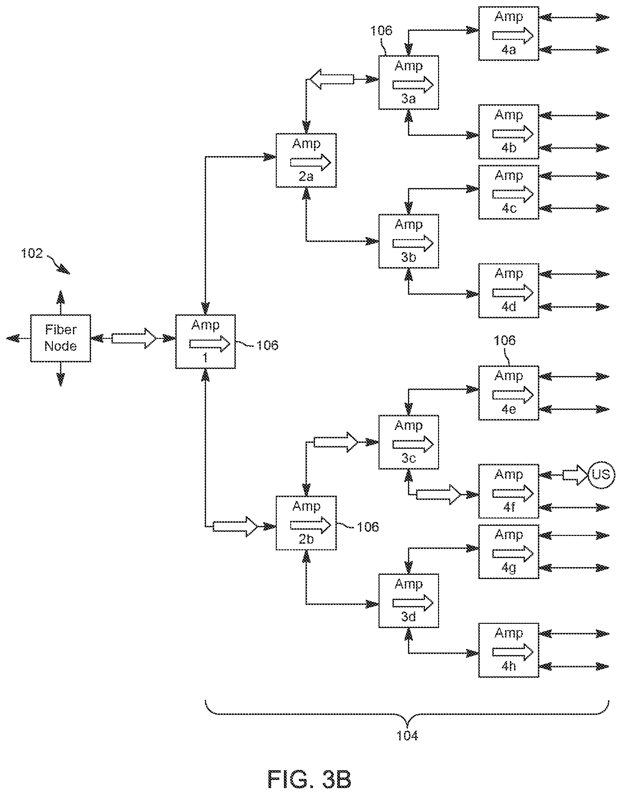

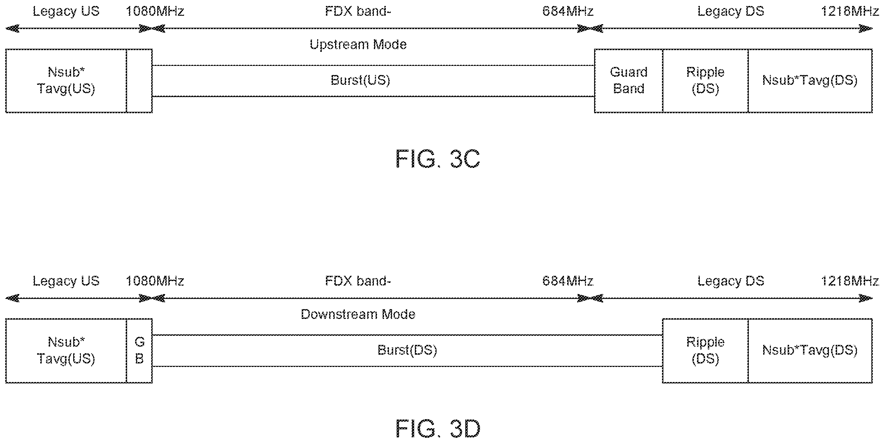

FIGS. 3A and 3B show an exemplary architecture 100 implementing a soft duplex system where a node 102 services upstream and downstream communications to a service group comprising a number of cable modems (not shown) via a branched network 104 of amplifiers 106. The network of amplifiers is arranged in a cascading hierarchy where the amplifier at a first level following the node (e.g. amplifier "1" shown in FIGS. 3A and 3B) feeds a plurality of amplifiers (e.g. amplifiers 2b and 2b) at the next level of the hierarchy, and so forth. As indicated previously, to facilitate a soft duplex architecture, each amplifier 106 may include at least two diplexers (or a single triplexer) to implement different splits between upstream and downstream transmissions, e.g. one configuration that implements a low upstream/downstream split at 85/108 MHz (meaning that frequencies below 85 MHz are dedicated to upstream transmissions and frequencies above 108 MHz are dedicated to downstream transmissions, the intervening bandwidth being a guardband), and a second configuration that implements a high upstream/downstream split at 684Mhz/834 MHz. As can be seen in FIG. 3C, when the service group connected to the node 102 is operating in upstream mode, the amplifiers 106 are switched to use the "high diplexer" setting, which means that transmissions up to 684 MHz are reserved for upstream transmissions, while downstream transmissions are sent in the 834-1218 MHz spectrum. Alternately, when the service group connected to the node 102 is operating in downstream mode as in FIG. 3D, the amplifiers 106 are switched to use the "low diplexer" setting, which means that transmissions up only to 85 MHz are reserved for upstream transmissions, while downstream transmissions are sent in the 108-1218 MHz spectrum.

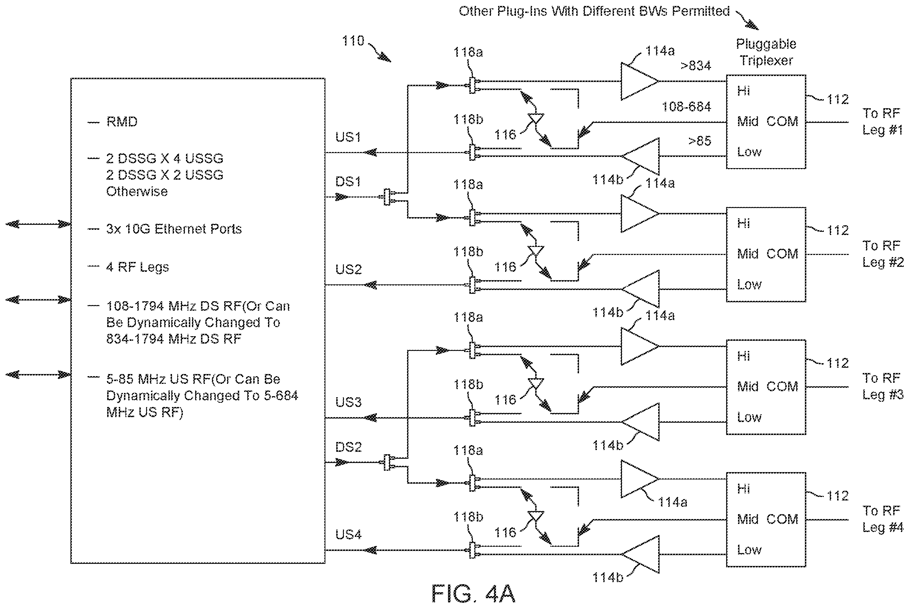

FIGS. 4A-4C each show respective embodiments of node and amplifiers capable of implementing the architecture 100 of FIGS 3A and 3B. FIG. 4A, for example, shows a remote node 110 illustrated as a Remote MACPHY device (RMD) that services up to four upstream service groups and implements a selectable 85/684 MHz upstream/downstream split - i.e. a node that can implement a first split between the upstream and downstream directions at 85 MHz, but when more bandwidth is needed in the upstream direction, can change that split to 684 MHz. Specifically, the node 110 may have four RF legs that each relay upstream/downstream content to a respective service group through a respective pluggable triplexer 112, each capable of separating signals into three bands: a high band greater than 834 MHz, a low band of less than 85 MHz, and a mid-band between 108 MHz and 684 MHz. The node 110 may also include an array of upstream and downstream amplifiers 114a and 114b, respectively, an array of double throw switches/amplifiers 116, an array of eight splitters 118a and combiners 118b, and another array of two splitters 119.

These elements are arranged so that a downstream signal from each of two ports DS1 and DS2 of the node 110 is first split in two by one of the splitters 119, each output of the splitters 119 then split again by a respective one of four of the splitters 118. A first output of these four splitters 118a is connected to a respective "high" port of a triplexer 112 via an amplifier 114a, and the second output of the four splitters 118 is connected to a respective double throw switch/amplifier 116, the operation of which will be explained below. Conversely, in the upstream direction, each upstream port US1 to US4 of the RMD is connected to a respective one of the other four combiners 118b, where a first input of each of these four combiners is connected to the "low" port of a respective triplexer 112 via an amplifier 114b, and the other input connected to a respective double throw switch/amplifier 116.

In operation, the node 110 as shown in FIG. 4A will constantly transmit downstream data above 834 MHz via splitters 119, 118a, an amplifier 114a and the triplexer 112 high port. The node 110 is constantly receiving upstream data below 85 MHz via the triplexer 112 low port, an amplifier 114b and combiner 118b. The mid-band spectrum can be dynamically be changed to the upstream or downstream direction by appropriately configuring the switch/amplifier 116. The switch/amplifier 116 for a given US port may be configured independent of the other switch/amplifiers 116. Each port of node 110 is capable of operating between a first mode as shown in FIG. 4A where downstream signals are provided from each downstream port DS 1, DS 2 to the mid-port of a respective pair of the four triplexers 112 due to the position of the double throw switch/amplifier 116. In this mode, the triplexer 112 mid-port is providing downstream signals in 108-684 MHz and the upstream signals, 5-85 MHz, from the only the low port of each of the triplexer 112 is routed to US 1 to US 4 ports of the node 110. In a second mode of operation, however, the double throw switches/amplifiers 116 are actuated to instead connect the mid-port of a triplexer 112 to its respective upstream port US 1 to US 4 via combiner 118b and disconnect the downstream signals from the mid port of each triplexer 112. In this second mode of operation, both the low port and mid port of the triplexer 112 is connected to a respective upstream port US 1 to US 4 of the node 110, while only the high port of the triplexer 112 receives a downstream signal.

Those of ordinary skill in the art will appreciate that other configurations of splitters/amplifiers may achieve the same functionality as shown in FIG. 4A. For example, instead of having a downstream port of the RMD 110 connected to a first 1x2 splitter 119 that in turn feeds two 1x2 splitters 118, these three 1x2 splitters may simply be replaced by a single 1x4 splitter. Similarly, other pluggable triplexers implementing different splits, and/or combinations of diplexers may be utilized instead.

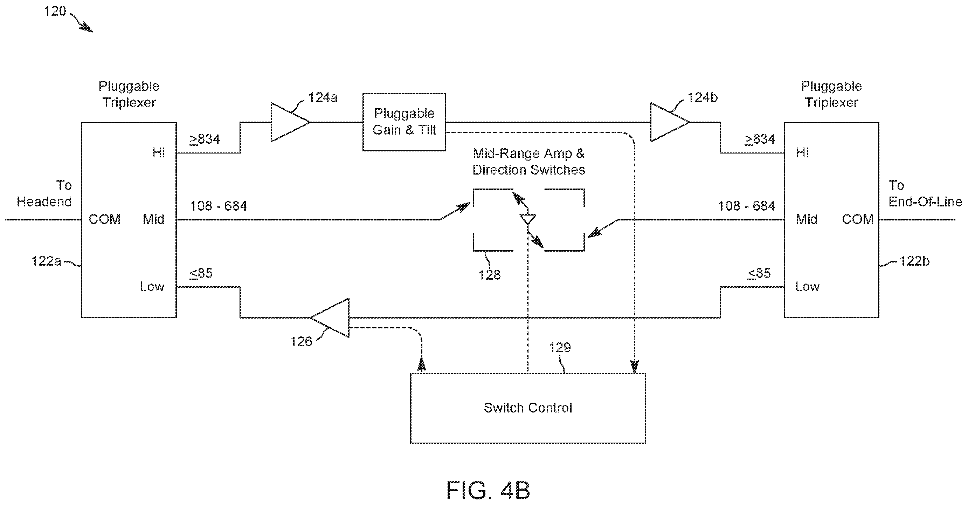

FIG. 4B shows a Line Extender amplifier circuit 120 that is similarly configured to implement a soft-duplex system in which downstream and upstream signals share an intermediate frequency band in a time-division duplexed manner. Specifically, the amplifier circuit 120 includes two pluggable triplexers 122a and 122b, each with a high port that passes downstream frequencies greater than or equal to 834 MHz, a low port that passes upstream frequencies less than or equal to 85 MHz, and a mid-port that passes shared upstream/downstream frequencies between 108 and 684 MHz. In the downstream direction, an input from the high port of triplexer 122a is connected to the high port of triplexer 122b via an intervening gain/tilt module 124a that preliminarily adjusts the gain of the downstream signal as a function of frequency to compensate for line losses that also vary by frequency, so that the tilted signal can be amplified by amplifier 124b. Similarly, the upstream signal from the low port of triplexer 122b is connected to the low port of triplexer 122a after the gain of the upstream signal is adjusted by amplifier 126. The upstream signal, being band-limited to a small amount of spectrum will in ordinary cases need no tilt adjustments. The circuit 120 also includes a midrange double throw switch/amplifier module 128 which allows the mid-ports of the pluggable triplexers 122a and 122b to selectively alternate between passing upstream signals and downstream signals via the position of the switch. The line extender circuit 120 is suitable for applications when upstream and downstream soft duplex signals conveyed along a length of cable need to be amplified to compensate for line losses. Thus, if the triplexer 122a receives a soft duplex signal where the downstream signal occupies the mid-band of 108-684 MHz, then the switch/amplifier module 128a is set to the position shown in FIG. 4B. Alternatively, if the triplexer 122b receives a soft duplex signal where the upstream signal occupies the mid-band of 108-684 MHz, then the switch/amplifier module 128a is set to the position opposite what is shown in FIG. 4B. A switch control circuit 129 may be used to operate the switch/amplifier module 128a.

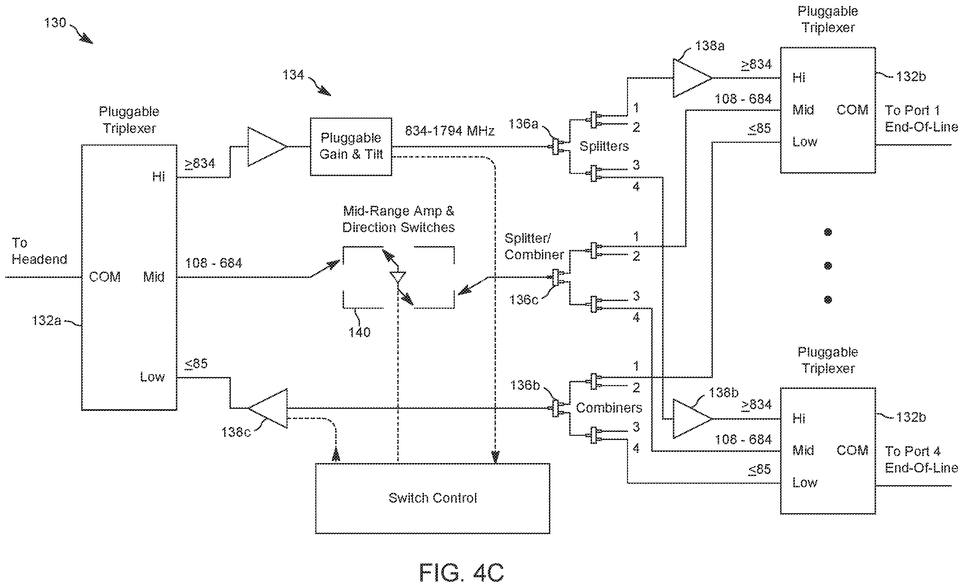

FIG. 4C shows an exemplary multi-port bridger amplifier circuit 130 by which a triplexer 132a connected to a northbound port that receives a downstream soft-duplex signal to be amplified, and also transmits an amplified soft-duplex upstream signal, is connected to multiple triplexers 132b at respective southbound ports that each receive an upstream soft duplex signal to be amplified and transmit an amplified downstream soft duplex signal. In the circuit 130, the high port of the triplexer 132a, which receives a downstream signal to amplified is connected to a pluggable gain/tilt module 134 which operates in the same manner as described with respect to FIG. 4B. The output of the gain/tilt module 134 is passed through splitter array 136a to feed the high ports of triplexers 132b after the tilted signal is further amplified as necessary by a respective amplifiers 138a. Thus, the downstream signal received at the high port of triplexer 132a is amplified and passed on through the high ports of all triplexers 132b. Similarly, the upstream signals received at the low port of each of the triplexers 132b are combined at combiner array 136b, amplified at amplifier 138c, and fed to the low port of the triplexer 132a.

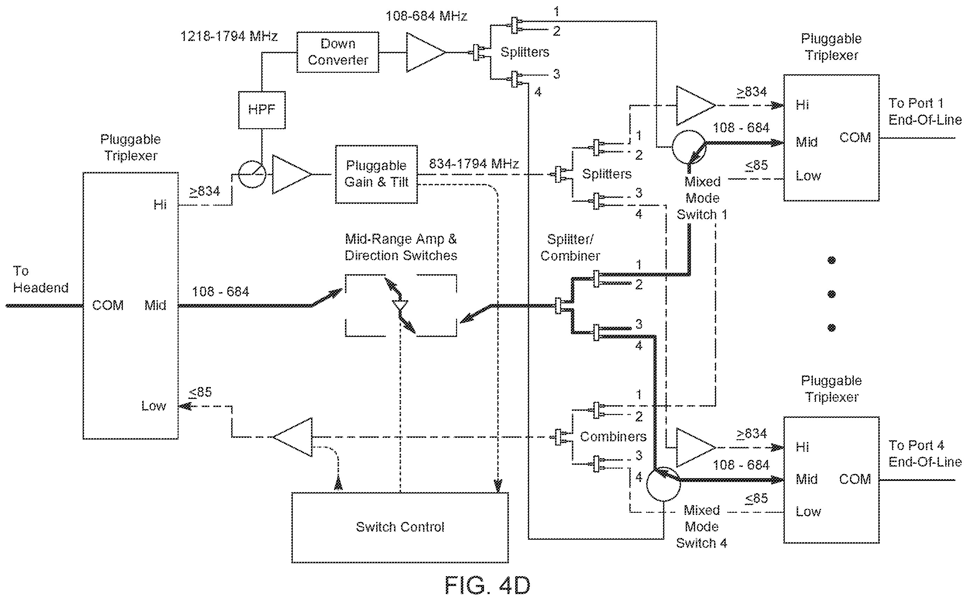

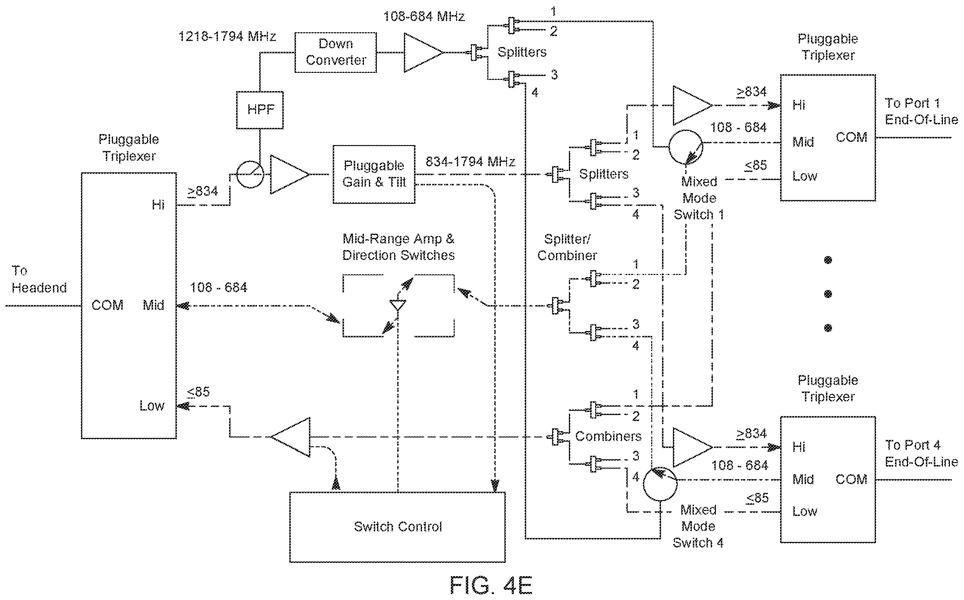

The position of the double throw switch/amplifier 140 as controlled by switch control 142 determines whether the signals exchanged between the mid port of the triplexer 132a and the mid ports of the triplexers 132b are upstream signals or downstream signals, as described above with respect to FIGS 4A and 4B. If the switch/amplifier 140 is in the position as shown in FIG. 4C, the downstream signal from triplexer 132a mid-port is amplified and fed to the mid-ports of the triplexers 132b via splitter/combiner network 136b, while if the switch/amplifier 140 is in the position opposite that shown in FIG. 4C, the upstream signals from triplexers 132b are combined by splitter/combiner network 136b, the combined signal is amplified, and then fed to the mid-port of the triplexer 132a. These two different modes of operation of the exemplary bridger amplifier circuit 130 shows the signal flows in FIGS. 4D and 4E, respectively.

Referring again to FIGS 3A-3D, as can also be appreciated in this system, however, the entire service group of cable modems behaves as a single transmission group. In other words, so long as one cable modem in the service group is transmitting in the upstream direction using the shared soft duplex spectrum, 108-684 MHz, as seen in FIG 3A, all amplifiers connected to the cable modems will be switched to the "high" diplexer setting where the triplexer mid-port is passing upstream signals. This means that during such time all other cable modems will also have their downstream transmissions bandwidth limited to the high band above 834 MHz, regardless of whether they also need the shared soft duplex spectrum to transmit in the upstream direction. Notably, this group behavior exists independently of how many interference groups exist with the service group associated with the node 102. For example, referring to FIG. 3A, the modem(s) connected to amplifier "4a" may be in a different interference group than the modem(s) connected to amplifier 4(b) and the mere fact that a modem connected to amplifier 4b is transmitting upstream and within the shared soft duplex spectrum itself does not inhibit the modems connected to amplifier 4a from receiving downstream transmissions due to noise from the upstream transmission. Instead, the modems connected to amplifier 4a are inhibited form receiving downstream transmissions because the shared soft duplex spectrum along the entire path from amplifier 4b to the node needs to be reserved for upstream transmissions so that a modem connected to amplifier 4b can send upstream data to the node 102. This is acceptable in the near term to enable high upstream burst rates, but does not address the longer-term issue of increased system capacity.

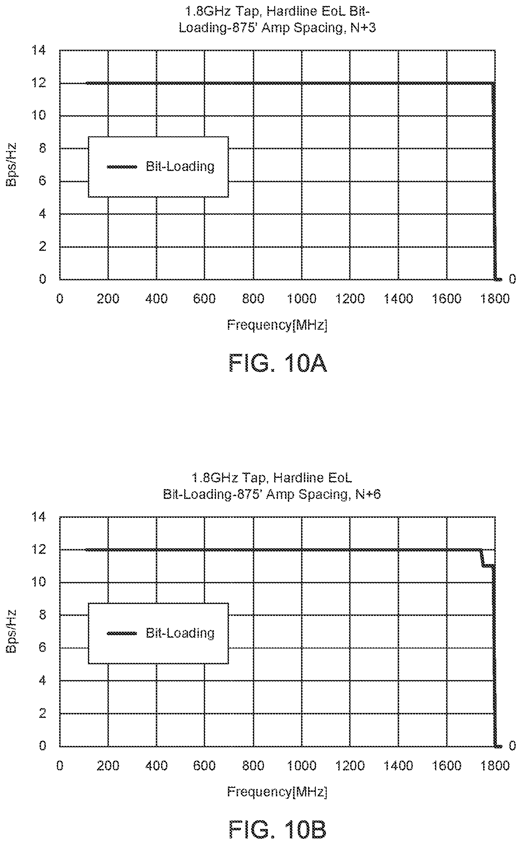

As an alternative to the dynamic soft-duplex architecture shown in FIGS 3A and 3B, it is possible to implement extended spectrum (e.g., a 1.8/3.0 GHz plant) to increase system capacity. Upstream bandwidth is increased by moving the upstream split higher (e.g., 300-684MHz), which then pushes downstream usage into the higher frequencies. However, this approach also involves a significant overhaul of the Hybrid Fiber Coax (HFC) plant including replacement of passive taps in addition to active amplifiers. Some typical results of what might be achieved in the home using existing taps and hardlines between taps are shown in FIGS 10A-10H. These figures, which will be discussed in more detail later in this specification, show that although HFC with 1-GHz taps might be pushed to support 1.2 GHz DOCSIS 3.1 (D3.1) systems, there appears to be minimal bandwidth available to the home above the D3.1 top frequency of 1218MHz for N+x plants.

Another issue with the extended spectrum approach discussed in the preceding paragraph is that for the foreseeable future there may only be a limited number of 1.8+ GHz-capable cable modems, set-top boxes (STBs) or other consumer premises equipment (CPE) devices in the HFC plant. The majority of the installed base will be existing CPE, including legacy STB (to 870MHz), DOCSIS 3.0 (to 1002MHz) and DOCSIS 3.1 (to 1218MHz). Pushing the upstream split higher removes valuable downstream capacity from these existing technologies.

This concern also exists with respect to the dynamic soft duplex architecture of FIGS 3A and 3B. While dynamic soft duplex allows upstream and downstream sharing of a limited FDX Band, this can only be shared with D3.1 OFDM channels. Thus, if the FDX Band is maximized for upstream capacity - e.g., 108-648MHz, then all the older legacy DOCSIS 2.0/3.0 and STB equipment gets squeezed into the upper 834-1002 MHz range. As CPE migrates to higher D3.1 penetration, DOCSIS 3.1 OFDM channels will be squeezed since 1002-1218 MHz is the only dedicated downstream OFDM Bandwidth. The FDX band might be shared between downstream and upstream, but this will become problematic with the larger N+x service group sizes over time. Eventually there will be a need that will require the dynamic soft-FDD single transmission group to be segmented, which given existing technology will require an expensive node split and push fiber deeper into the HFC network.

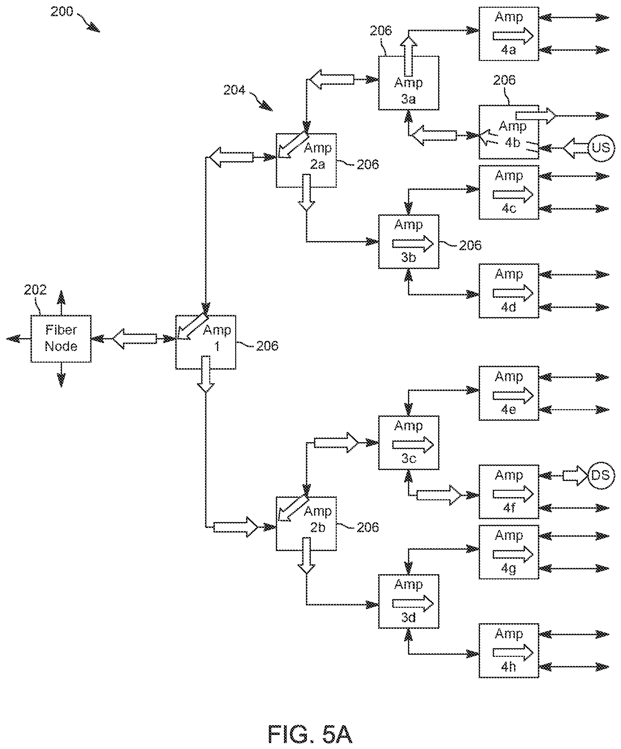

Referring to FIG. 5A, one embodiment of the present disclosure may comprise a "mixed mode" dynamic soft duplex architecture 200 in which a fiber node provides upstream and downstream services to a plurality of customers (not shown) through a tree-and-branch network 204 having a plurality of "mixed mode" amplifiers 206. One or more of the "mixed mode" amplifiers in the network 204 preferably include at least one of the following characteristics. First, both its northbound, or Network-Side Interface (NSI) port, as well as each of its southbound or premise side ports have individual switching mechanisms by which the port may determine whether the shared soft-duplex band is used for upstream or downstream transmissions. Second, each southbound port of a mixed mode amplifier is preferably switchable independently of other southbound ports or the northbound port. Third, each mixed mode amplifier is preferably capable of down-converting an overlay portion at the upper part downstream signal it receives at its NSI to the shared soft-duplex frequency band. Fourth, each mixed mode amplifier is preferably capable of being operated or switched independently of other amplifiers in the architecture 200. With the system as just described, any amplifier may have some RF ports select the soft duplex band for upstream transmission while other ports of the same amplifier select the soft duplex band for downstream transmission, and these selections may be made independently of other amplifiers.

Preferably, the fiber node 202 may be capable of providing the tree-and-branch network 204 of mixed mode amplifiers with an overlay above the upper part of the spectrum reserved for downstream spectrum. That overlay preferably includes the part of the downstream content that would ordinarily be sent in the shared soft-duplex band, but is instead put at a frequency in the higher spectrum above the ordinary downstream frequency channel. In some embodiments, the node 202 may be capable of generating a portion of the downstream signal it receives to provide that overlay portion, but in other embodiments it may simply receive a signal with the overlay portion at the upper end of the downstream spectrum and be capable of passing that signal on to the network 204.

In this manner, each "mixed mode" amplifier is preferably capable of down-converting the overlay portion of the downstream signal received to the shared soft duplex spectrum at selected southbound ports, while other southbound ports are configured to transmit upstream signals in the shared spectrum. For example, when an upstream signal is present at the lower port of the amplifier 4b, as shown in FIG. 5A, that amplifier may be configured to down-convert the received overlay spectrum to the shared soft-duplex band only at the upper port, but not the lower port, and its NSI port may be configured to dedicate the shared soft-duplex band to upstream traffic. Similarly, Amplifier 3A may be configured to behave similarly, but those of ordinary skill in the art will appreciate that, because the top port of amplifier 3a is in the DS direction (i.e. it has already performed a down-conversion (since amplifier 4a is downstream only and not using the shared soft duplex band for an upstream transmission), then amplifier 4a may simply have all its ports configured in a condition where the shared band is reserved for downstream content) while the lower port of amplifier 3a is in the upstream direction receiving upstream signals in the shared spectrum from amplifier 4b.

The same is true for amplifiers 2a and amplifier 1 - i.e., their NSI port and their top southbound port may be configured to dedicate the shared soft-duplex band to upstream traffic, while it down-converts the overlay portion to the shared soft duplex band at its lower port, which allows all amplifiers connected directly or indirectly to their lower southbound ports to simply be configured in a condition where the shared band is reserved for downstream content. The mixed mode architecture 200 therefore allows the node 202 to serve more granularly-segmented transmission or interference groups, such that more customers may receive the benefit of greater downstream capacity. Some modems may be receiving downstream data in the shared band simultaneously with other modems transmitting upstream data in the shared band, which starts to emulate a true FDX system.

As can be easily appreciated from FIG. 5A, when all ports of an amplifier are in upstream mode or downstream mode, the amplifier behaves as a traditional dynamic soft duplex system as shown in FIG. 3A and 3B. Mixed mode operation occurs when one or more ports are in upstream mode, while another one or more ports are in downstream mode. In any "mixed mode amplifier" the NSI port should be in upstream mode whenever any southbound port is in the upstream mode so the upstream signals can be passed up to the node. In some embodiments, a communications link to each of the mixed mode amplifiers indicates which mode to use for each port in the amplifier. Alternatively, other embodiments may utilize a communications link that only instructs the operation of the southbound ports, and internal control mechanisms (e.g., logic circuitry) operate the northbound port based on the mode of operation of the southbound ports. Furthermore, those of ordinary skill in the art will appreciate that the architecture of FIGS 5A to 5C may encompass other upstream/downstream splits, and/or be extended to multiple shared bands.

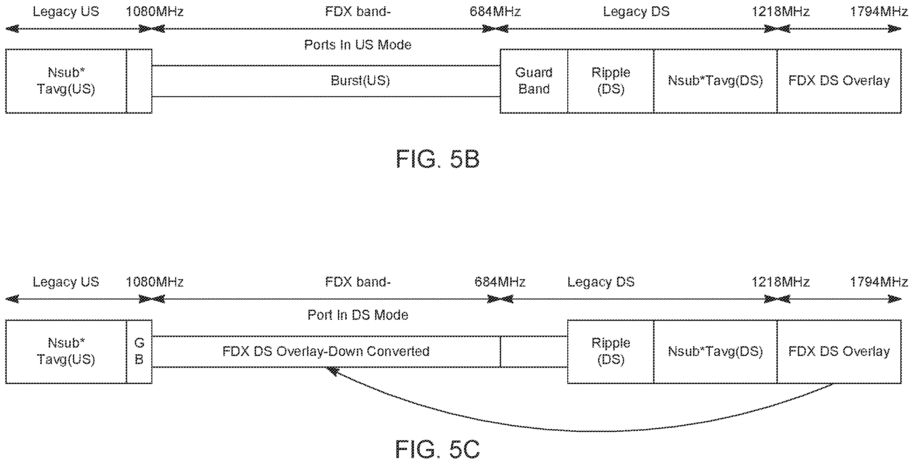

FIGS 5B and 5C respectively show the spectrum for upstream and downstream ports of a mixed mode amplifier in the soft duplex implementation of FIGS 5A. Specifically, as seen in FIG, 5B, when a port of a mixed mode amplifier is in upstream mode, the upstream bandwidth occupies the spectrum between 5 and 684 MHz, while the downstream bandwidth occupies the spectrum above 834 MHz, with a guardband from 684-834 MHz. Conversely, as seen in FIG. 5C when a port of a mixed mode amplifier is in downstream mode, the upstream bandwidth occupies a spectrum between 5 and 85 MHz while the downstream bandwidth occupies the spectrum above 108 MHz, with a guardband between 85-108 MHz.

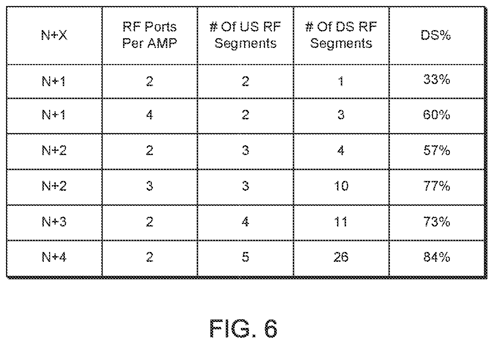

In traditional dynamic soft duplex systems with one amplifier in upstream mode, all amplifiers in the tree-and branch topology will also operate in upstream mode, preventing any connected customers from receiving downstream content in the affected shared spectrum. With mixed mode operation, however, a certain percentage of RF segments to customers will still receive downstream content in the shared soft duplex band while other segments are in upstream mode. As shown in FIG. 6, the percentage of RF segments continuing to receive downstream content when any one segment to one of the terminal amplifiers in the network is switched to upstream mode increases with the number of southbound RF ports to the amplifier and the cascade length. For example, an N+3 system with two ports per amplifier has 15 RF segments, of which 11 (73%) will still receive downstream content. Notably, for all but one of the examples shown in FIG. 6, more than 50% of the RF segments still receive downstream content in the shared soft duplex band when using mixed mode amplifiers.

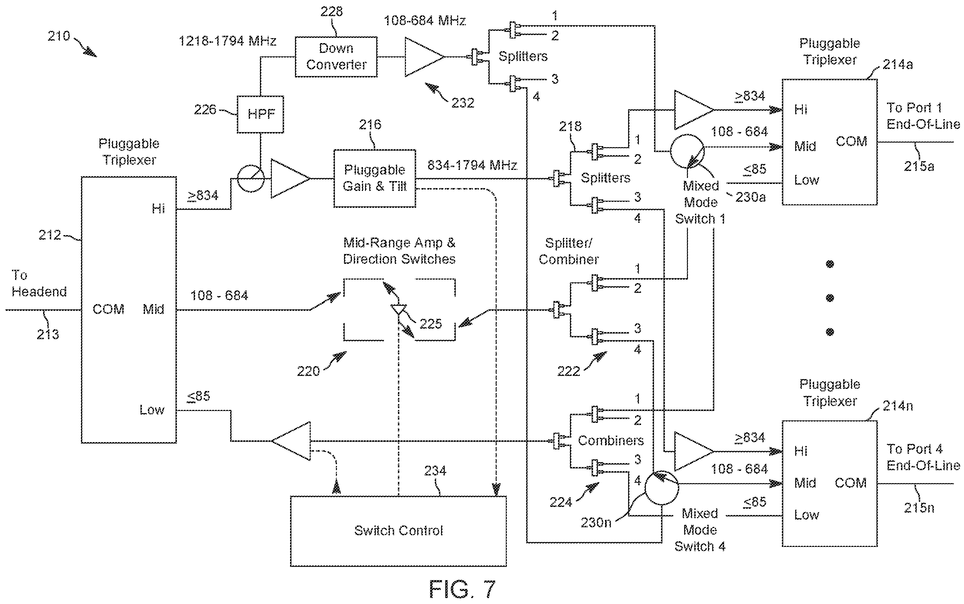

FIG. 7 shows an exemplary circuit 210 that implements the functionality of a mixed mode bridger amplifier as described above. Though FIG. 7 shows a bridger amplifier design to illustrate a mixed mode amplifier, those of ordinary skill in the art will readily appreciate that the switching circuitry shown may easily be adapted to other types of amplifiers or devices, such as line extended amplifier or a fiber node. The bridger amplifier 210 may preferably include a pluggable triplexer 212 having a northbound port 213 that receives a downstream signal from a head end and sends upstream signals to the head end, and may also preferably include a plurality of pluggable triplexers 214a . . . 214n at each of a plurality of southbound ports 215a . . . 215n of the amplifier 210 that each receive respective upstream signals sent towards a head end and send downstream signals from the head end towards the modems.

The triplexer 212 at the northbound port 213 of the amplifier 210 has its Hi output port connected to each Hi input port of each triplexer 214a . . . 214n by means of splitter/combiner network 218 and if desired, pluggable amplification/gain/tilt module 216. Similarly, the triplexer 212 has its Low input port connected to each Low output port of each triplexer 214a . . . 214n by means of splitter/combiner network 224. The triplexer 212 has its mid port connected to the mid port of each triplexer 214a . . . 214n by means of double throw switch 220, mid-range amplifier 225, and splitter/combiner network 222, where the double throw switch 220 determines whether the Mid "shared" port of triplexer 212 is delivering a downstream signal to all triplexers 214a . . . 214n, or receiving an upstream signal from one or more of the triplexers 214a . . . 214n. The splitter network 222 is connected to each respective one of mixed mode switches 230a . . . 230n, the operation of which will be described shortly.

The Hi output port of the pluggable triplexer 212 may include an up-sampled duplicate of some or all of the signal output by its Mid output port, in a spectrum above that occupied by the downstream signal received by most subscribers of the network. This duplicate of the "Mid" signal - representing the downstream signal of the spectrum shared between the upstream and downstream paths, may be isolated by high pass filter 226, down-converted by downconverter 228m and amplified by amplifier 232 before being fed into splitter/combiner network 234. Each output of splitter/combiner network 234 may be connected to a respective one of the mixed mode switches 230a . . . 230n. Switch control 234 includes logic circuity for independent operation of double throw switch 220 and each of mixed mode switches 230a . . . 230n.

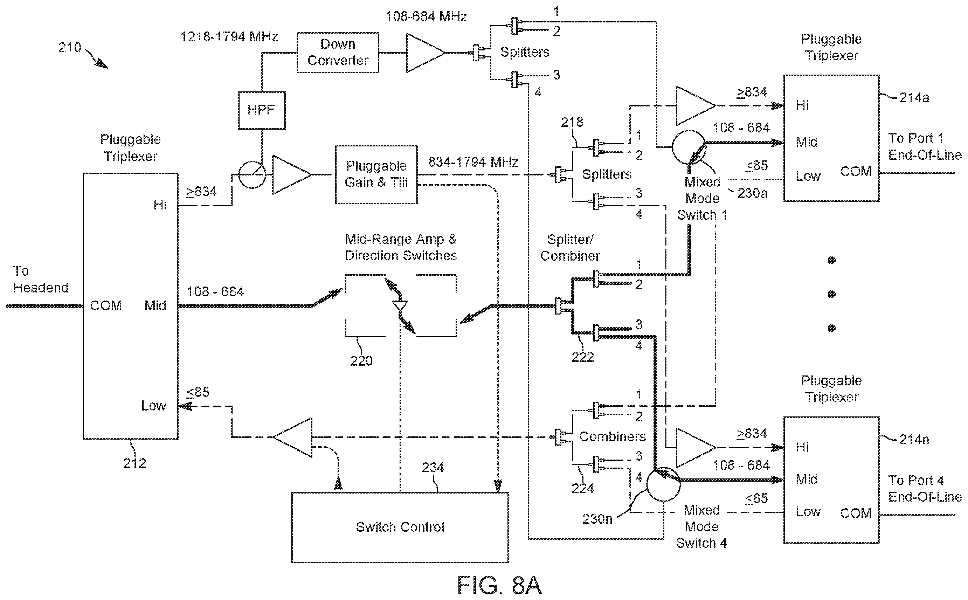

FIGS 8A to 8D show the operation of the bridger amplifier 210 using switch control 234 to actuate the double throw switch 220 and mixed mode switches 230a .. . . 230n. In all positions of the switches 220, 230a . . . 230n, the downstream signal at the output of the "Hi" port of triplexer 212 is continuously delivered to the "Hi" port of each triplexer 214a . . . 214n, and conversely the output of the "Low" port of each triplexer 214a . . . 214n is continuously delivered to the "Low" input port of triplexer 212. As already noted, the double throw switch 220 determines whether the Mid "shared" port of triplexer 212 is delivering a downstream signal to the Mid port of all triplexers 214a . . . 214n, or receiving an upstream signal from the Mid port of one or more of the triplexers 214a . . . 214n. The respective mixed mode switches 230a . . . 230n, for each triplexer 214a . . . 214n are used to deliver the down-converted duplicate of the downstream spectrum to the "Mid" ports of any triplexer 214a . . . 214n not providing an upstream signal in the shared spectrum to the triplexer 212 during a time period in which the double throw switch 220 is in the upstream direction and at least one other triplexer 214a . . . 214n is providing an upstream signal in the shared spectrum to the Mid port input of triplexer 212.

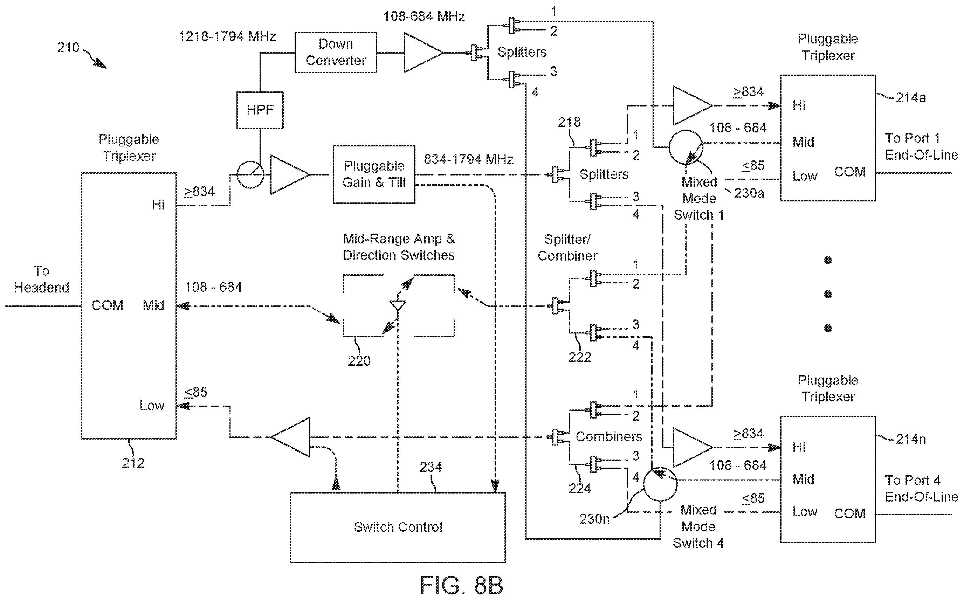

FIG. 8A for example, shows the double throw switch 220 in a position that delivers an amplified downstream signal to the splitter network 222 over the shared spectrum, and each mixed mode switch 230a . . . 230n is in a position that delivers the amplified downstream signal from the double throw switch 220 to the "Mid" port of its respectively associated triplexer 214a . . . 214n. In this configuration, all southbound ports of amplifier 210 are using the shared spectrum to propagate a downstream signal. FIG. 8B, conversely, shows the double throw switch 220 in a position that amplifies an upstream signal received at the double throw switch 220, and every mixed mode switch 230a . . . 230n is in a position that delivers an upstream signal from one or more of the triplexers 214a . . . 214n to the double throw switch 220 to be amplified and delivered to the "Mid" port of triplexer 212. In this configuration, all southbound ports of amplifier 210 are using the shared spectrum to propagate an upstream signal.

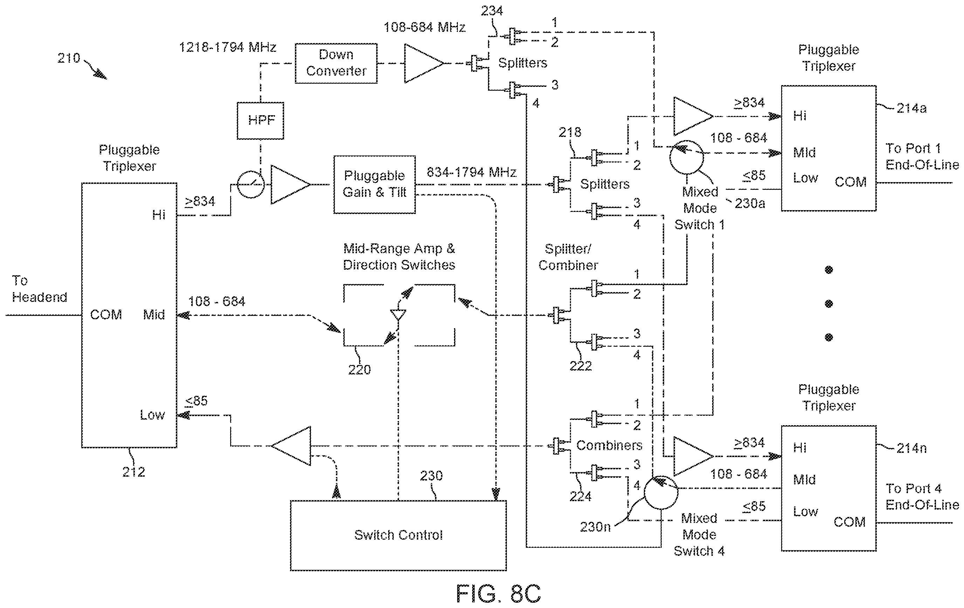

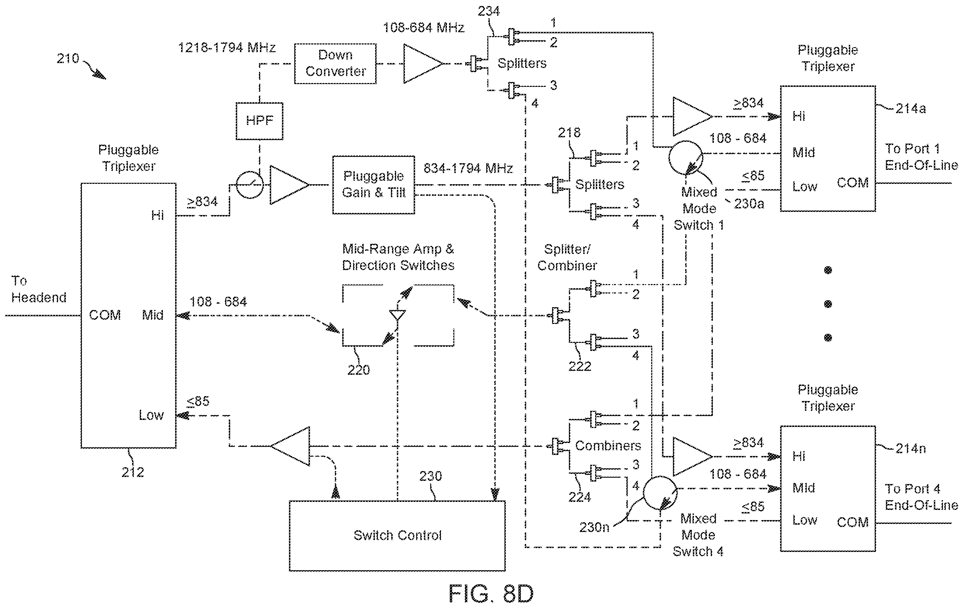

FIG. 8C shows a configuration where pluggable triplexer 214n is delivering an upstream signal to the "Mid" port of triplexer 212 via mixed mode switch 230n combiner network 222 and double throw switch 220, while triplexer 214a is receiving a downstream signal at its "Mid" port from triplexer 212. This is because mixed mode switch 230a is in a position that receives the down-converted signal from splitter network 234, which contains a duplicate of the downstream signal that would have been output from the "Mid" port of triplexer 212 had that port not been needed to receive an upstream signal from another southbound port of the amplifier 210. Similarly, FIG. 8D shows a configuration where the pluggable triplexer 214a is delivering an upstream signal to the "Mid" port of triplexer 212 via mixed mode switch 230a, combiner network 218 and double throw switch 220, while triplexer 214n is receiving a downstream signal at its "Mid" port from triplexer 212. This is because mixed mode switch 230n is in a position that receives the down-converted signal from splitter network 234, which contains a duplicate of the downstream signal that would have been output from the "Mid" port of triplexer 212 had that port not been needed to receive an upstream signal from another southbound port of the amplifier 210.

Those of ordinary skill in the art will appreciate that, although the implementation shown in FIGS. 7 -8D uses pluggable triplexers, other implementations may also be used, including using pluggable diplexers.

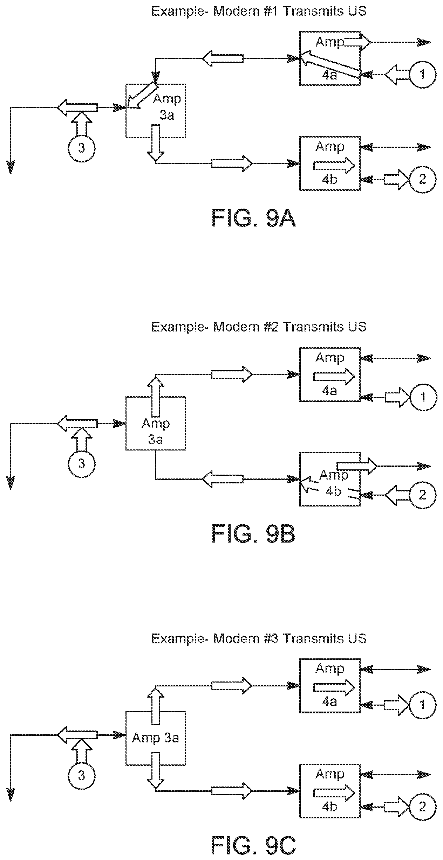

In a traditional FDX system as shown in FIG 1, interference groups (IG) are organized into Transmission Groups (TG) for scheduling purposes. Each TG is independent of other TGs. If at least one modem is transmitting an upstream signal in a TG, then none of the other modems in that TG can receive a downstream signal at that frequency while modems in the other TGs can receive a downstream signal at that frequency. In a conventional soft-FDD system, an entire RF leg operates as a single TG. In a soft-FDD system operating in "mixed mode", there are now overlapping TGs due to the tree-and-branch topology of the typical node-amplifier network shown in FIGS 3A and 3B. Referring to FIGS. 9A-9C, for example, the soft duplex configuration of amplifiers and modems that are more northbound of any mixed mode amplifier are dependent on any southbound modem transmitting in the upstream direction. Thus, as shown in FIGS 9A and 9B, when either of modem 1 or modem 2 is transmitting in the upstream direction, the segment delivering content to modem 3, and modem 3, must be configured to utilize the shared spectrum for the upstream direction because the northbound port of amplifier 3a must be configured to reserve the shared spectrum for upstream content. In FIG 9A, both modem 1 and modem 3 are considered part of the same TG. But then in FIG 9B, both modem 2 and modem 3 are considered part of the same TG.

However, modems that are southbound of mixed mode amplifier(s) are not dependent on the upstream transmission of any modem upstream of the mixed mode amplifier(s). Thus, the modems 1 and 2 in each of FIGS 9A-9C may receive downstream content in the shared spectrum even when modem 3 is transmitting in the upstream direction because each of amplifiers 3a, 4a, and 4b are may down-convert the downstream signal to the shared spectrum since none of the modems served by those amplifiers need to transmit upstream in the shared spectrum. Modems that are at the same level of the tree are usually independent of each other, e.g., RF segments associated with modems. In FIG 9C, modem 3 is considered to be in a TG by itself. To maximize system capacity, the scheduler needs to be aware of these overlapping TG to know which modems can receive the downstream signal when any given modem is transmitting upstream.

Modems on different RF segments that are at the same level of the tree are independent of each other. That is to say, segments associated with modems 1 and 2 in each of FIGS 9A-9C may use the shared spectrum for upstream content while others use the shared spectrum for downstream content.

Given these considerations, a novel partial mixed mode architecture is disclosed in which some, but not all, of the amplifiers in a network are configured for mixed mode operation while other amplifiers are not. More specifically in some preferred embodiments amplifiers downstream of a non-mixed mode amplifier are also non-mixed mode amplifier, while amplifiers upstream of a non-mixed mode amplifier may be a mixed mode amplifier. In another (or additional) embodiment, amplifiers on the same level of an amplifier network are either all mixed mode amplifiers, or all non-mixed mode amplifiers. The benefits of the proposed partial mixed mode amplifier will be discussed later in this specification.

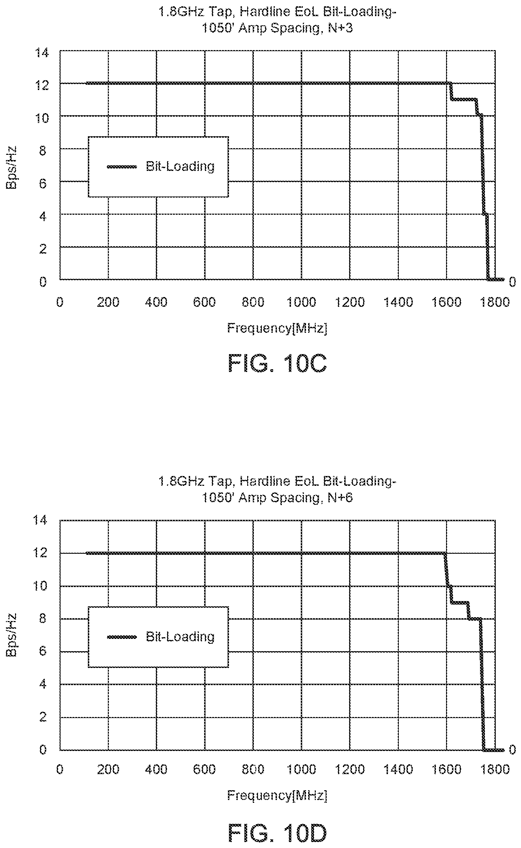

As shown previously in FIG 5C, maximizing the downstream capacity in the full shared spectrum, 108-684MHz, requires a DS overlay in the 1218-1794MHz range to be down-converted (i.e. a maximum of 576MHz of total bandwidth). FIGS 10A-10D represent RF simulations run with 1.8 GHz amplifiers and 1.8 GHz taps for 875' and 1050' amp-to-amp spacings, respectively in each of N+3 and N+6 architectures where the numbers 3 and 6 respectively define how many amplifiers are in cascade. As can be seen in FIG 10A and 10B, the N+3 and N+6 plants with 875' amp-to-amp spacing achieves basically full capacity all the way to 1794MHz. FIG 10C and 10D with the longer 1050' amp-to-amp spacings achieve almost full capacity, except that there is some slight capacity degradation above 1700MHz. For 1050' amp-amp spacing N+3 architectures still have high capacity through about 1725MHz while N+6 architectures still have high capacity through about 1600 MHz. In general, the 1.8GHz plant will have plenty of capacity across all combinations to fully implement the mixed-mode system as shown in FIG 3A and 3B. While Extended Spectrum DOCSIS 4.0 (ESD) modems can natively use the 1218-1794MHz spectrum, these modems will be in a minority for a very long time. The mixed-mode operation enables this extra capacity above 1218MHz to be utilized by ordinary DOCSIS 3.1 modems that are limited up to 1218MHz.

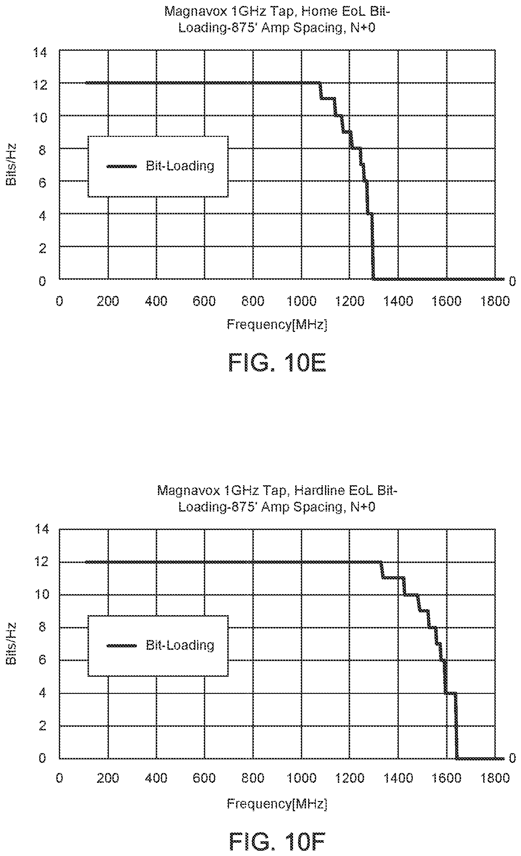

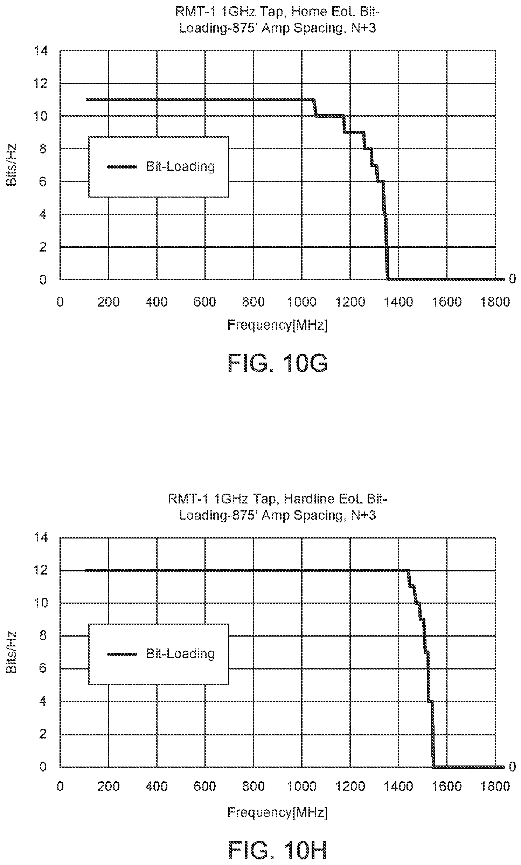

However, most cable plants today have not yet been upgraded to 1.8GHz. Referring to FIGS 10E -10H, it was discovered that existing 1GHz taps, instead of existing coax lines, will likely be the initial limiting factor in upgrading service to soft duplex architectures using mixed mode amplifiers. As noted earlier, the size of the FDX shared spectrum is flexible. These simulated RF results indicate that existing taps (FIGS 10E - 10H) may still have enough excess bandwidth above 1218MHz to support smaller shared spectrum band sizes of 96/192/288MHz (or maybe even 384 MHz under very certain conditions). For example, FIG. 10E shows that a N+0 architecture with common 1GHz Magnavox taps may only support bandwidth up to about 1250 MHz to the End-of-line (EoL) home with a 100' drop cable, which is still quite adequate to provide services up to 1218MHz. However, FIG. 10F shows that the same 1GHz Magnavox tap can provide nearly 1500MHz of bandwidth over the hardline coax to the first amplifier in the cascade after the fiber node. This example shows that while home devices may be limited to 1218MHz due to losses in the drop cable, the first mixed-mode amplifier might receive 288MHz of downstream overlay in the 1218-1506MHz spectrum. Fig. 10G and 10H show a second example RF simulation using a N+3 architecture with common 1GHz RMT-1 taps that provides ~1350MHz of bandwidth to the EoL home (last tap after the third amplifier) but can deliver just over 1500MHz to the next (fourth) mixed-mode amplifier in the cascade. Thus, the mixed-mode system can utilize these upper bandwidths that are not available to the home. However, longer term once larger shared spectrum bands such as 108-684MHz are required, then some of these existing taps may need to be replaced, which is much simpler then splitting a node and pulling fiber deeper into the network.

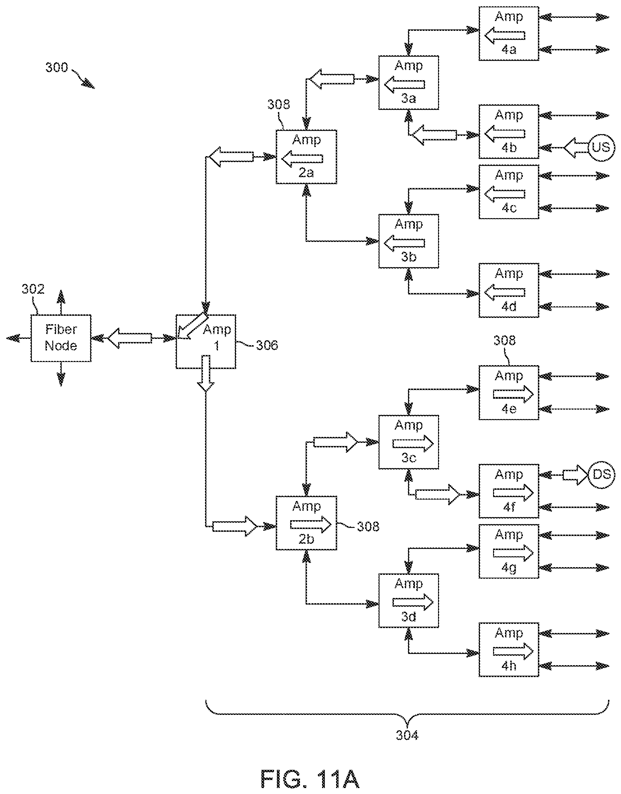

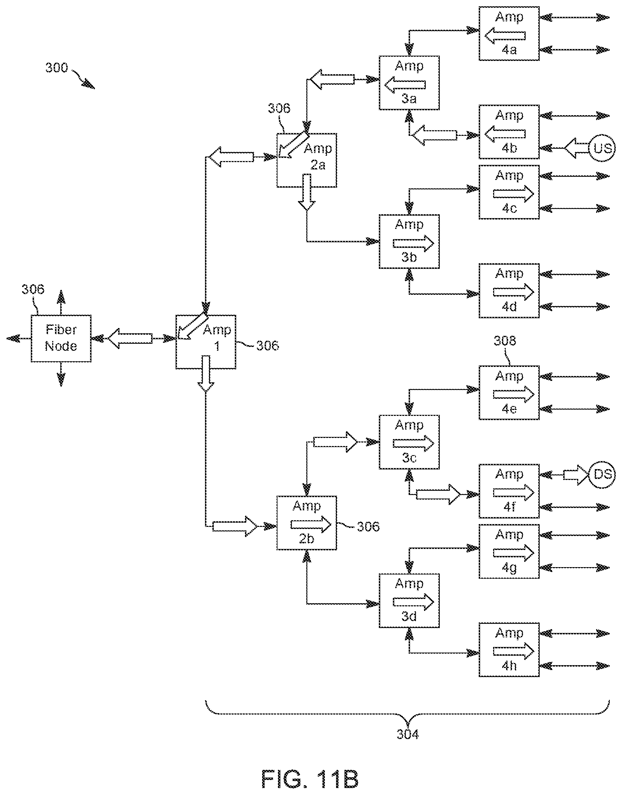

Given these considerations along with the fact that upgrading all of the taps to 1.8GHz is a costly and time-consuming task, FIGS 11A and 11B show various embodiments of a partial "mixed mode" architecture in which some amplifiers in a network are upgraded to "mixed mode" while others are not. Referring specifically to FIG. 11A, an architecture 300 may comprise a fiber node 302 that provides downstream and upstream service to a network 304 of amplifiers. At least a first amplifier 306 is configured as a "mixed mode" amplifier as described in the foregoing specification and shown in FIG 7 while at least a different amplifier 308 is not configured as a "mixed mode" amplifier but as a conventional soft-FDD amplifier such as the one shown in FIG 4C. It is expected that the conventional soft-FDD amplifier 308 will be simpler and more cost effective then the "mixed mode" amplifier 306. Therefore, it may be desirable to limit the total number of "mixed mode" amplifiers 308 in the network 304. The architecture 300 shown in FIG. 11A, for example, may be a first phase of a gradual upgrade to full mixed mode operation, where in this first phase only "Amp 1" that is directly connected to the node is upgraded to mixed mode operation. This effectively splits the ports of Amp 1 into two transmission groups (TG), where all downstream amplifiers connected to the top port of Amp 1 are in a single TG (where all amplifiers are configured to transmit upstream/downstream in the shared spectrum as a group) and all downstream amplifiers connected to the bottom port are in a second, different such TG. Where Amp 1 has been upgraded to be a "mixed mode" amplifier, taps between the node and Amp 1 need to be upgraded only if/when the shared spectrum band exceeds what the taps can support as shown in FIG 10E-10H. This works well provided the traffic load is reasonably spread across the "Amp 1" ports.

If traffic usage continues to rise or the traffic is not evenly balanced between the "Amp 1" ports, then there may be a need to split into additional smaller TGs. Referring specifically to FIG. 11B, a partial mixed mode architecture may similarly include a configuration where Amp 1, as well as one or both of Amp 2a and Amp 2b may be upgraded to mixed mode operation, in e.g., a second upgrade phase where one or more existing TGs of amplifiers are further split. Thus, for example, where Amp 2a is upgraded to mixed mode operation amplifiers 3a, 4a, 4b are split into a different TG than amplifiers 3b, 4c, and 4d. Similarly, when amplifier 2b is upgraded to mixed mode operation, amplifiers 3c, 4e, and 4f are split into a different TG than amplifiers 3d, 4g, and 4h. Again, once either or both of amplifiers 2a, 2b are upgraded to mixed mode operation, the taps between these amplifiers and Amp 1 need only be upgraded if the shared spectrum band exceeds what the taps can support as shown in FIG 10E-10H. Amplifiers may be upgraded, as previously described, by either replacing the amplifier with a mixed-mode amplifier or by modifying the existing amplifier in the field to provide it with mixed-mode functionality through, e.g. a plug-in module.

Those of ordinary skill in the art will appreciate that, by careful selection of which amplifiers in a network to upgrade to mixed mode operation, the most efficient upgrade path over time may be achieved. Thus, in some embodiments, upgrading a network to mixed mode operation may include a phased upgrade where amplifiers are upgraded based on their hierarchical level in the network, which should ordinarily correspond to the distance between the amplifier and the node. In such embodiments, a phased upgrade may involve upgrading all amplifiers at the same level prior to upgrading an amplifier at the next level. In other embodiments, a phased upgrade may involve a more flexible approach where a first amplifier is upgraded only while all other amplifiers in the upstream path from the first amplifier to the node are also upgraded. In this manner, no amplifiers are upgraded to mixed mode operation in a sequence such that the use of that amplifier in mixed mode is not fully enabled at that time.

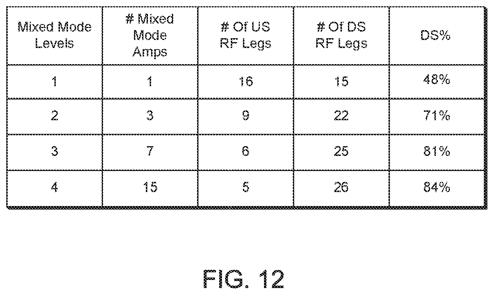

FIG. 12 shows the cost-benefit of the partial mixed mode architecture just described in that allows Multiple System Operators (MSOs) to build out their next generation hybrid-fiber coax plant in a simplified, cost-effective manner. Assuming the N+4 tree-and-branch topology of FIGS 11A and 11B, for example, where there are fifteen total amplifiers, upgrading to a single first-level partial mixed mode architecture as shown in FIG 11A has minimal investment for providing transmission group segmentation into two TGs, where only one out of the fifteen amplifiers need to be upgraded, and one out of 31 segments might need new taps. yet this single upgrade allows 48% of the RF segments to still receive downstream transmissions when one modem is transmitting in the upstream direction.

Similarly, assuming that in a next phase only amplifiers 2a and 2b are upgraded to mixed mode as shown in FIG 11B, only three out of 15 amplifiers will have required an upgrade, and three out of 31 RF segments might have taps needing upgrades, yet 71% of the RF segments will still have access to downstream transmissions in the FDX band when any one modem is transmitting in the upstream direction. Compared to upgrading the entire plant (15 amplifiers plus taps on 31 RF segments), the second phase is still relatively cost effective (3 amplifiers and perhaps taps on 3 RF segments) but the shared DS spectrum is now available to almost 50% more of the network then in the first phase. However, as FIG 12 shows, adding mixed mode amplifiers at each additional level requires even larger investments, yet the additional gains keep shrinking. Such diminishing returns continue with respect to third and fourth such phases. Therefore, one of ordinary skill in the art can easily appreciate that careful selection of which amplifiers to upgrade to mixed mode operation can achieve dramatic cost savings for any given amount of RF legs (i.e., customers) upgraded to utilize the mixed mode, shared spectrum band.

Unless the context indicates otherwise, a reference in a claim to the number of instances of an element, be it a reference to one instance or more than one instance, requires at least the stated number of instances of the element but is not intended to exclude from the scope of the claim a structure or method having more instances of that element than stated. The word "comprise" or a derivative thereof, when used in a claim, is used in a nonexclusive sense that is not intended to exclude the presence of other elements or steps in a claimed structure or method.

## Claims

1. A device that includes a northbound port that interconnects said device to a cable modem termination system 'CMTS' and customer devices capable of propagating at said northbound port a downstream signal received from said CMTS occupying a first frequency spectrum and capable of propagating at said northbound port an upstream signal provided to said CMTS occupying a second frequency spectrum, wherein said first frequency spectrum of said downstream signal received from said CMTS at said northbound port and said second frequency spectrum of said upstream signal provided to said CMTS at said northbound port have partially overlapping frequency spectrums over an overlapping frequency spectrum, the device having a plurality of southbound ports that each provide said downstream signal from said device to respective customer devices, each of said plurality of southbound ports independently operable to select whether to propagate an upstream signal received from one of said respective customer devices to said CMTS having signals in said overlapping frequency spectrum or propagate a downstream signal received from said CMTS to said respective customer devices having signals in said overlapping frequency spectrum, wherein a first one of said plurality of southbound ports is configurable to propagate said upstream signal in said overlapping frequency spectrum received from a respective said customer device and a second one of said plurality of southbound ports is simultaneously configurable to propagate said downstream signal received from said CMTS in said overlapping frequency spectrum.

2. The device of claim 1 receiving a downstream signal in the first frequency spectrum having a portion of the first frequency spectrum not in the overlapping frequency spectrum that includes content delivered to said customer devices through the southbound ports using the overlapping frequency spectrum.

3. The device of claim 2 configured to selectively down-convert the portion of the first frequency spectrum to the range of the overlapping frequency spectrum.

4. The device of claim 3 where each southbound port has a respectively associated first switch operable to selectively connect to, or disconnect from, an amplifier that amplifies the down-converted portion of the overlapping frequency spectrum.

5. The device of claim 4 where the first switch is operable to selectively connect to a second switch capable of amplifying an upstream signal when the first switch is not connected to the amplifier that amplifies the down-converted portion

6. The device of claim 1 having a first switch capable of selectively and alternately amplifying a respective one of an upstream signal and a downstream signal.

7. The device of claim 6 having at least one second switch selectively connectable to and disconnectable from the first switch.

## Patentansprüche

1. Vorrichtung, die einen Northbound-Port umfasst, der die Vorrichtung mit einem Kabelmodem-Abschlusssystem "CMTS" und Kundenvorrichtungen verbindet, die an dem Northbound-Port ein von dem CMTS empfangenes Downstream-Signal, das ein erstes Frequenzspektrum belegt, ausbreiten können und an dem Northbound-Port ein an das CMTS bereitgestelltes Upstream-Signal, das ein zweites Frequenzspektrum belegt, ausbreiten können, wobei das erste Frequenzspektrum des Downstream-Signals, das von dem CMTS an dem Northbound-Port empfangen wird, und das zweite Frequenzspektrum des Upstream-Signals, das dem CMTS an dem Northbound-Port bereitgestellt wird, teilweise überlappende Frequenzspektren über ein überlappendes Frequenzspektrum aufweisen, die Vorrichtung eine Vielzahl von Southbound-Ports aufweist, die jeweils das Downstream-Signal von der Vorrichtung an die jeweiligen Kundenvorrichtungen bereitstellen, wobei jeder der Vielzahl von Southbound-Ports unabhängig betreibbar ist, um auszuwählen, ob ein von einer der jeweiligen Kundenvorrichtungen empfangenes Upstream-Signal mit Signalen in dem überlappenden Frequenzspektrum zu dem CMTS oder ein von dem CMTS empfangenes Downstream-Signal mit Signalen in dem überlappenden Frequenzspektrum zu den jeweiligen Kundenvorrichtungen übertragen wird, wobei ein erster der Vielzahl von Southbound-Ports konfigurierbar ist, um das Upstream-Signal in dem überlappenden Frequenzspektrum, das von einer jeweiligen Kundenvorrichtung empfangen wird, auszubreiten, und ein zweiter der Vielzahl von Southbound-Ports gleichzeitig konfigurierbar ist, um das Downstream-Signal in dem überlappenden Frequenzspektrum, das von dem CMTS empfangen wird, auszubreiten.

2. Vorrichtung nach Anspruch 1, die ein Downstream-Signal in dem ersten Frequenzspektrum empfängt, das einen Teil des ersten Frequenzspektrums aufweist, der nicht in dem überlappenden Frequenzspektrum liegt und Inhalt umfasst, der an die Kundenvorrichtungen über die Southbound-Ports unter Verwendung des überlappenden Frequenzspektrums geliefert wird.

3. Vorrichtung nach Anspruch 2, die konfiguriert ist, um den Teil des ersten Frequenzspektrums selektiv in den Bereich des überlappenden Frequenzspektrums herunterzuwandeln.

4. Vorrichtung nach Anspruch 3, wobei jeder Southbound-Port einen jeweils zugeordneten ersten Schalter aufweist, der so betreibbar ist, dass er selektiv mit einem Verstärker verbunden oder von diesem getrennt wird, der den heruntergewandelten Teil des überlappenden Frequenzspektrums verstärkt.

5. Vorrichtung nach Anspruch 4, wobei der erste Schalter so betreibbar ist, dass er mit einem zweiten Schalter, der in der Lage ist, ein Upstream-Signal zu verstärken, selektiv verbunden werden kann, wenn der erste Schalter nicht mit dem Verstärker, der den heruntergewandelten Teil verstärkt, verbunden ist.

6. Vorrichtung nach Anspruch 1, die einen ersten Schalter aufweist, der in der Lage ist, ein jeweiliges Signal aus einem Upstream-Signal und einem Downstream-Signal selektiv und abwechselnd zu verstärken.

7. Vorrichtung nach Anspruch 6, die wenigstens einen zweiten Schalter aufweist, der selektiv mit dem ersten Schalter verbindbar und von diesem trennbar ist.

## Revendications

1. Dispositif qui comporte un port orienté vers le nord qui interconnecte ledit dispositif à un système de terminaison par modem câble « CMTS » et des dispositifs clients capables de propager au niveau dudit port orienté vers le nord un signal aval reçu depuis ledit CMTS occupant un premier spectre de fréquences et capables de propager au niveau dudit port orienté vers le nord un signal amont fourni audit CMTS occupant un deuxième spectre de fréquences, dans lequel ledit premier spectre de fréquences dudit signal aval reçu depuis ledit CMTS au niveau dudit port orienté vers le nord et ledit deuxième spectre de fréquences dudit signal amont fourni audit CMTS au niveau dudit port orienté vers le nord ont des spectres de fréquences se chevauchant partiellement sur un spectre de fréquences en chevauchement, le dispositif ayant une pluralité de ports orientés vers le sud qui fournissent chacun ledit signal aval depuis ledit dispositif aux dispositifs clients respectifs, chacun de ladite pluralité de ports orientés vers le sud pouvant fonctionner indépendamment pour sélectionner s'il faut propager un signal amont reçu depuis l'un desdits dispositifs clients respectifs vers ledit CMTS ayant des signaux dans ledit spectre de fréquences en chevauchement ou propager un signal aval reçu depuis ledit CMTS vers lesdits dispositifs clients respectifs ayant des signaux dans ledit spectre de fréquences en chevauchement, dans lequel un premier parmi ladite pluralité de ports orientés vers le sud est configurable pour propager ledit signal amont dans ledit spectre de fréquences en chevauchement reçu depuis un dispositif client respectif et un deuxième parmi ladite pluralité de ports orientés vers le sud est configurable simultanément pour propager ledit signal aval reçu depuis ledit CMTS dans ledit spectre de fréquences en chevauchement.

2. Dispositif selon la revendication 1, recevant un signal aval dans le premier spectre de fréquences ayant une portion du premier spectre de fréquences qui ne se trouve pas dans le spectre de fréquences en chevauchement qui comporte un contenu délivré auxdits dispositifs clients par l'intermédiaire des ports orientés vers le sud en utilisant le spectre de fréquences en chevauchement.

3. Dispositif selon la revendication 2, configuré pour convertir sélectivement par abaissement de fréquence la portion du premier spectre de fréquences en la plage du spectre de fréquences en chevauchement.

4. Dispositif selon la revendication 3, dans lequel chaque port orienté vers le sud possède un premier commutateur respectivement associé pouvant fonctionner pour sélectivement se connecter à, ou se déconnecter d'un amplificateur qui amplifie la portion abaissée en fréquence du spectre de fréquences en chevauchement.

5. Dispositif selon la revendication 4, où le premier commutateur peut fonctionner pour se connecter sélectivement à un deuxième commutateur capable d'amplifier un signal amont lorsque le premier commutateur n'est pas connecté à l'amplificateur qui amplifie la portion abaissée en fréquence.

6. Dispositif selon la revendication 1, ayant un premier commutateur capable d'amplifier sélectivement et alternativement soit un signal amont, soit un signal aval.

7. Dispositif selon la revendication 6, ayant au moins un deuxième commutateur pouvant être sélectivement connecté au premier commutateur et déconnecté de celui-ci.
